# EUROPÄISCHE PATENTANMELDUNG

(11) **EP 1 175 986 A1**
(43) Veröffentlichungstag der Anmeldung: **30.01.2002**
(21) Anmeldenummer: 01115553.8
(22) Anmeldetag: 28.06.2001
(51) Int. Cl.: B29C 41/20, E04F 13/08, E04F 13/14, B29C 33/42, B29C 33/38

(54) **Verfahren zum Herstellen von Platten, durch das Verfahren hergestellte Platten, deren Verwendung und Giessform für deren Herstellung**

(30) Priorität: 08.07.2000 DE 10033417; 22.11.2000 DE 10057949; 26.05.2001 DE 10125804
(71) Anmelder: Kraus, Thomas, 63322 Rödermark (DE); Fleischer, Michael, 63322 Rödermark (DE)
(72) Erfinder: Kraus, Thomas, 63322 Rödermark (DE); Fleischer, Michael, 63322 Rödermark (DE)
(74) Vertreter: Zapfe, Hans, Dipl.-Ing.

(57) **Zusammenfassung**

Es geht um Platten, insbesondere für die Wand- und/oder Bodenverlegung, bei denen aus einem Tragkörper (1) mit einer im wesentlichen ebenen, glatten oder strukturierten, aber nicht saugfähigen freien Oberfläche (3) Oberflächenbereiche (1a) hervorragen, die die Struktur von unregelmäßig gebrochenen Natur- oder Kunststeinen haben und dadurch nicht rutschig sind und eine Fußmassage erlauben. Dies kann entweder dadurch geschehen, daß flache Einlagekörper (2) auf ihren Unterseiten mit einer Masse (7) aus einem aushärtenden Kunststoff hintergossen werden, während sie mit ihren später sichtbaren Oberseiten (2a) in eine stützende Schicht aus einem nicht saugfähigen Formwerkstoff aus der Gruppe der elastomeren Kunststoffe, Thermoplaste, Knetmassen, Modelliermassen Plastilin und Wachse eingebettet sind, und daß nach dem Aushärten des Tragkörpers (1) bzw. der Masse (7) der Formwerkstoff restlos entfernt wird. Dies kann aber auch dadurch geschehen, daß die stützende Schicht nach dem Abtrennen als Gießform für weitere Platten verwendet wird, die vollständig aus der aushärtbaren Masse (7) bestehen. In einem solchen Fall können die Platten nachträglich auch mit einem Bild-überzug versehen werden, der den vorstehenden Oberflächenbereichen (1a) das Aussehen von Natur- und/oder Kunststeinen verleiht. Es geht sowohl um das Herstellverfahren, als auch um die Platten und deren Verwendung selbst und schließlich um Gießformen für deren Herstellung.

## Beschreibung

Die Erfindung betrifft ein Verfahren zum Herstellen von Platten, insbesondere für die Boden- und Wandverlegung, nach dem Oberbegriff des Patentanspruchs 1, Platten nach den Oberbegriffen der Patentansprüche 14 und 19, die Verwendung solcher Platten nach den Patentansprüchen 24 und 25 und eine Gießform für die Herstellung solcher Platten nach Patentanspruch 26.

Diese Platten sollen bei Verwendung als Bodenplatten begehbar sein, insbesondere barfuß zur Fußmassage, eine Drainagewirkung aufweisen, leicht zu reinigen sein und keinem Abrieb unterliegen. Es geht um die Förderung von "Wellness" und Gesundheit und um ein funktionelles Design.

Es sind Platten in Form von Fliesen oder Kacheln bekannt, die aus einem einheitlichen, in der Regel keramischen Material bestehen und eine glasierte Vorderseite haben, die entweder glänzend oder matt ausgebildet und auch mit dekorativen Motiven versehen sein kann. Die Dicke beträgt zwischen etwa 8 und 12 mm. Derartige Platten sind jedoch in nassen Zustand rutschig, was ihre Verwendung in sanitären Räumen und im Freien gefährlich macht.

Bekannt sind auch sogenannte Waschbetonplatten, bei denen in die Oberfläche bzw. Sichtseite Kieselsteine oder Splittkörner eingebettet sind. Solche Platten sind jedoch groß (50 cm x 50 cm; 5 bis 6 cm dick) und schwer (etwa 30 kg). Sie sind für die Verlegung im Freien, z.B. als Gehwegplatten, vorgesehen und für die Verlegung in Innenräumen anstelle der üblichen Fliesen und Kacheln nicht geeignet und auch schwer zu reinigen. Diese Waschbetonplatten und ihr Herstellungsverfahren sind gattungsfremd.

Durch die DE 44 25 506 A1 sind zwei Verfahren zum Herstellen von Belagelementen für Wandverkleidungen und Bodenbeläge bekannt, bei denen die Vorder- oder Sichtseiten - abgesehen von regelmäßigen Fugen - eben, vorzugsweise hoch-glänzend, sein sollen, Bei einem ersten Ausführungsbeispiel werden planparallele Platten mit ihren späteren Sichtseiten auf den ebenen Boden eines Formkastens gelegt und anschließend mit einer Tragschicht übergossen. Sofern die Verwendung von Natursteinpartikein angegeben ist soll dadurch die glatte bzw. glänzende Oberfläche nicht unterbrochen werden. Bei einem zweiten Ausführungsbeispiel werden die Belagelemente ohne Verwendung von Festkörpern aus mehreren gegossenen Schichten "aufgebaut". Die Verarbeitung unregelmäßiger Festkörper ist ebensowenig angesprochen wie die Erzeugung einer rutschsicheren Oberfläche und/oder die Erzeugung eines Oberflächenprofils für eine Fußmassage, wenn die Belagelemente als Bodenbeläge verwendet werden sollen. Die Verwendung eines Formwerkstoffs für die Erzeugung einer unregelmäßigen Oberflächenstruktur ist nicht angegeben.

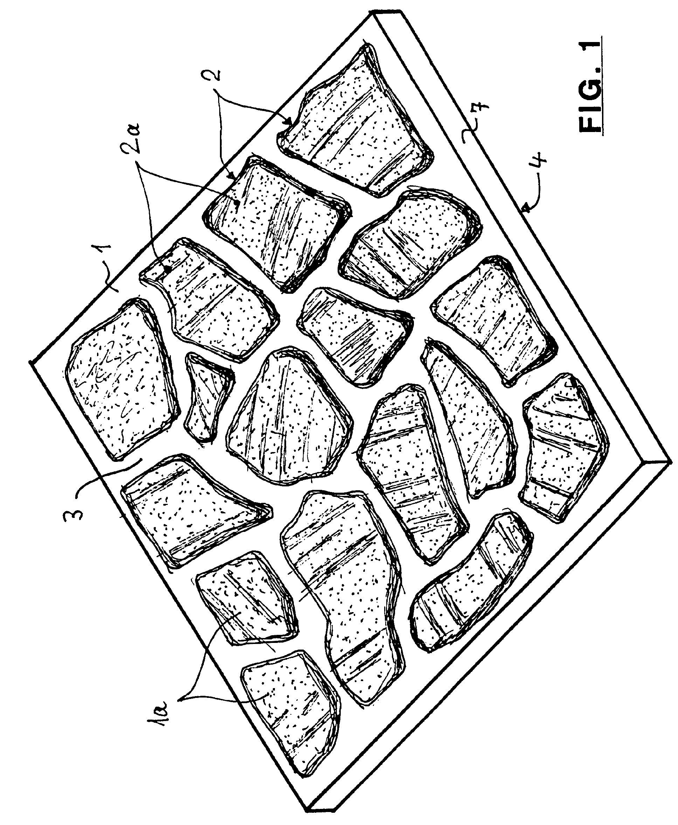

Durch die GB 1 363 843 A ist es bekannt, dekorative Wandbeläge aus Festkörpern herzustellen, zu den auch Natursteine gehören können, allerdings sollen alle Festkörper wenigstens eine ebene Oberfläche besitzen. Die Festkörper werden mit ihren ebenen Flächen auf den Boden eines Formkastens gelegt, worauf die Zwischenräume und Rückseiten mit einem Fugenmaterial wie Sand gefüllt bzw. beschichtet werden. Ein solches Fugenmaterial ist fließ- bzw. rieselfähig und saugfähig. Anschließend wird der Formkasten verschlossen und mit dem immer noch rieselfähigen Fugenmaterial auf den Kopf gestellt und der ursprüngliche Boden des Formkastens entfernt. Auf die noch nicht fixierte Masse aus Festkörpern und Sand wird jetzt eine zugeschnittene Matte aus einem imprägnierfähigen Material gelegt und ein Polyesterharz aufgegossen. Das Imprägniermaterial soll dabei drei verschiedene Funktionen ausüben: 1. Versteifung der Matte, 2. Verbindung der Matte mit den Festkörpern und 3. Verfestigung des Fugenmaterials. Als wichtig wird die Regelung der Eindringtiefe in das urspünglich rieselfähige Fugenmaterial bezeichnet. Die Grenzen zwischen dem imprägnierten und dem nicht imprägnierten Fugenmaterial sind jedoch weder glatt, noch verlaufen sie in einer Ebene, insbesondere nicht bei unregelmäßigen Festkörpern wie Natursteinen. Die Fugen sind unterschiedlich tief und rauh, unterliegen einem Abrieb, sind saugfähig und schlecht zu reinigen. Natursteine mit mindestens einer ebenen Fläche kommen jedoch in der Praxis nicht vor; sie müssen erst entsprechend bearbeitet werden. Das gesamte Verfahren ist also wegen der vielen Verfahrensschritte aufwendig und zeitraubend. Für die Verwendung als Fußbodenbeläge oder Wannenböden sind die Platten nach den jeweils linken Hälften der Figuren 1 bis 5 weder vorgesehen noch geeignet, weil sie zumindest barfuß nicht begehbar sind: Die überstehenden Festkörper sind scharfkantig und die Höhen in etwa genau so groß wie die ebenen Auflageflächen auf der imprägnierten Matte. Die Festkörper sind auch nicht flach. Die Platten nach den jeweils rechten Hälften der Figuren 1 bis 5 wären als Bodenbeläge zwar auch barfuß begehbar; sie sind jedoch glatt und erzeugen keine Fußmassage. Wenn man den Sand als Formwerkstoff bezeichnet, ist dieser nicht restlos von der erzeugten Platte entfernbar: Ein Teil des Sandes wird durch das eingedrungene Gießharz in unkontrollierbarer Weise an die Platte gebunden.

Der Erfindung liegt demgegenüber die Aufgabe zugrunde, Herstellverfahren und die dadurch erzeugten Platten anzugeben, die ein geringes Gewicht und eine geringe Dicke haben, universell für die Verlegung im Freien und in Innenräumen und auch als Wandbeläge geeignet sind, dennoch aber bei einer Bodenverlegung auch barfuß begehbar sind, eine erhebliche Rutschsicherheit aufweisen, eine medizinische Fußmassage bewirken, einen restlosen Wasserablauf ermöglichen und ohne Abrieb leicht zu reinigen sind.

Die Lösung der gestellten Aufgabe erfolgt bei dem eingangs angegebenen Verfahren erfindungsgemäß durch die Merkmale im Kennzeichen des Patentanspruchs 1, bei den eingangs angegebenen Platten durch die Merkmale in den Kennzeichen der Patentansprüche 14 und 19, bezüglich der Verwendung durch die Mermale der Patentansprüche 24 und 25 und bezüglich der Gießform durch die Merkmale des Patentanspruchs 26.

Durch die Erfindung wird die gestellte Aufgabe in vollem Umfange gelöst, insbesondere werden ein Herstellverfahren und die dadurch erzeugten Platten angegeben, die ein geringes Gewicht und eine geringe Dicke haben, universell für die Verlegung im Freien und in Innenräumen und auch als Wandbeläge geeignet sind, dennoch eine erhebliche Rutschsicherheit aufweisen und leicht zu reinigen sind. Außerdem wird bei einer groben Oberflächenstruktur auch eine medizinische Wirkung erzielt, nämlich bei Bodenplatten die der Fußmassage. Ferner ermöglichen die erfindungsgemäßen Platten einen restlosen Wasserablauf und sind ohne Abrieb leicht zu reinigen. insgesamt werden "Wellness" und Gesundheit gefördert, und die Platten haben ein funktionelles und auch optisch ansprechendes Design.

Vor allem aber ist die freie Oberfläche des Tragkörpers zwischen den Einlagekörpern in sich geschlossen und/oder glänzend, abriebfest und nicht saugfähig und liegt in einer Ebene, so daß bei einer Bodenverlegung ein Wasserablauf bzw. eine Drainage möglich ist.

Weitere vorteilhafte Ausgestaltungen und Wirkungen des Erfindungsgegenstandes ergeben sich aus den Merkmalen der Unteransprüche.

Ausführungsbeispiele des Erfindungsgegenstandes werden nachfolgend anhand der Figuren 1 bis 21 näher erläutert.

Es zeigen:
- Figur 1: Eine perspektivische Ansicht einer quadratischen Platte mit Natursteinen in einem Tragkörper aus einem Kunstharz,
- Figur 2: den ersten Schritt eines Herstellverfahrens einer Platte nach Figur 1 in einem Formbehälter,
- Figur 3: den zweiten Schritt eines Herstellverfahrens einer Platte nach Figur 1 in einem Formbehälter,
- Figur 4: das entformte Produkt des Verfahrens nach Figur 2,
- Figur 5: das Herstellverfahren eines weiteren Ausführungsbeispiels einer Platte nach Figur 1 in einem Formbehälter,
- Figur 6: das entformte Produkt des Verfahrens nach Figur 5,
- Figur 7: ein entformtes Produkt nach Figur 6 mit einem in die Masse eingebettteten Heizkörper,
- Figur 8: Eine perspektivische Ansicht einer quadratischen Platte mit Natursteinen in einem strukturierten Tragkörper aus einem Kunstharz,
- Figur 9: einen ersten Schritt eines Herstellverfahrens vor der Strukturierung des Formwerkstoffs in einer Gießform,
- Figur 10: die Strukturierung des Formwerkstoffs durch einen Prägestempel,
- Figur 11: zwei Einlagekörper unmittelbar vor dem Einbetten in den strukturierten Formwerkstoff,
- Figur 12: den Formwerkstoff mit den eingebetteten Einlagekörpern nach dem übergießen mit einem aushärtbaren Kunststoff
- Figur 13: ein entformtes Produkt nach Figur 12 in gewendeter Lage,
- Figur 14: Eine perspektivische Ansicht eines negativen Abgusses des Gegenstandes nach Figur 1 als Gießform aus einem flexiblen Formwerkstoff,
- Figur 15: das Herstellverfahren der Gießform nach Figur 14,
- Figur 16: die nach Figur 15 hergestellte Gießform in gewendeter Lage,
- Figur 17: die Gießform nach Figur 16 in einem Formkasten und nach dem Ausgießen mit einer homogenen fließ- und erstarrungsfähigen Masse,
- Figur 18: die Gießform nach Figur 16 in einem Formkasten und nach dem Ausgießen mit unterschiedlichen fließ- und erstarrungsfähigen Massen,
- Figur 19: eine Flächenanordnung von mehreren einzelnen Platten oder Plattenmodellen nach Figur 1,
- Figur 20: eine Gießform aus einem flexiblen Formwerkstoff, hergestellt durch einen Abguß auf den Gegenstand nach Figur 19 und
- Figur 21: einen Abguß einer Platte in einer modifizierten Gießform analog Figur 20.

Figur 1 zeigt einen Tragkörper 1 aus einem erstarrten, undurchsichtigen und bruchsicheren Kunststoff, beispielsweise aus einem Zwei-Komponenten-Harz, das auch durch teilweises Mischen zweier oder mehrerer Harze mit unterschiedlichen Farbpigmenten ein "marmoriertes" Aussehen erhalten kann.

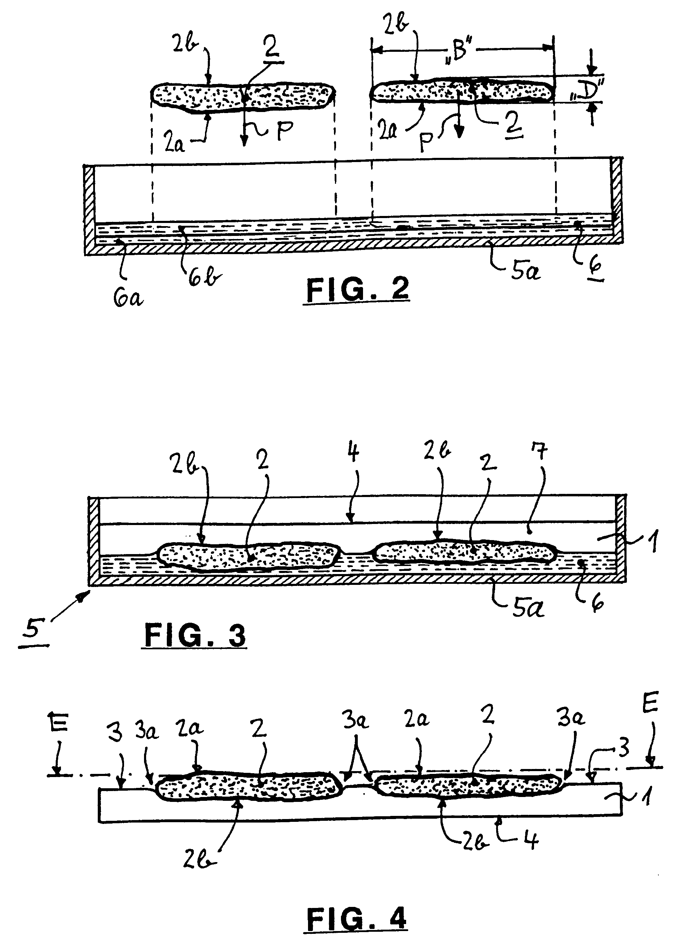

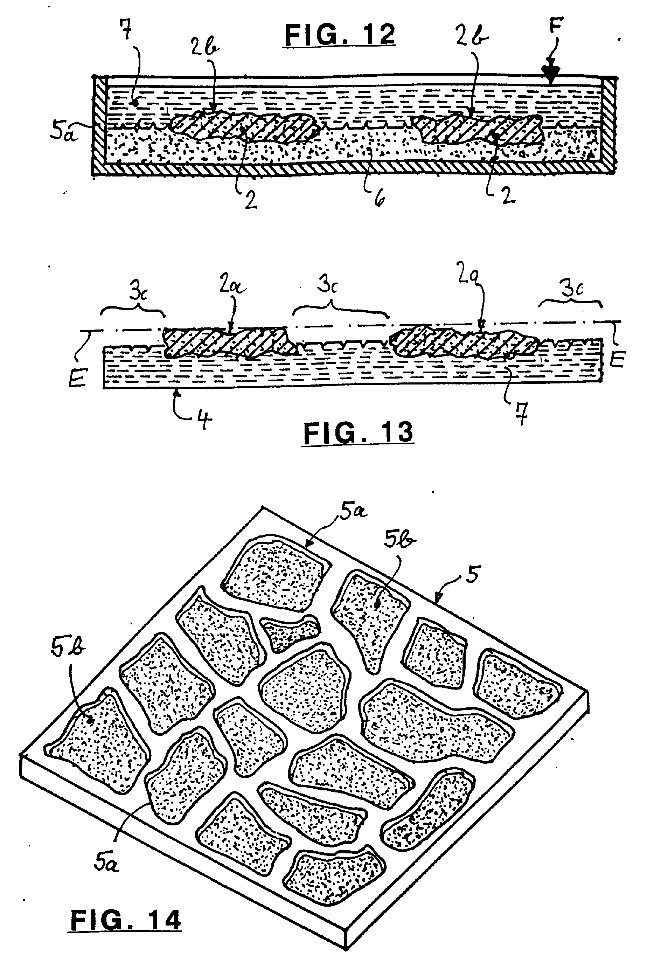

Eingebettet in diesen Kunststoff ist eine Vielzahl flacher und rauher Einlagekörper 2 aus Natursteinen mit unregelmäßigen Umrissen und Oberflächen und ggf. auch mit unterschiedlichen Farben und Farbschattierungen. Die freie Oberfläche 3 des Tragkörpers 1 ist eben, glänzend, nicht saugfähig, abriebfest und damit Schmutz abweisend und verläuft parallel zur Rückseite 4. Sofern die Einlagekörper 2 aus einem saugfähigen Material bestehen, ist es zweckmäßig, die Einlagekörper 2 entweder vor oder nach dem Einbetten mit einer für Feuchtigkeit undurchlässigen Grundierung, einem sogenannten "Sperrgrund", zu überziehen. Die nachträgliche Imprägnierung ist vorzuziehen, damit eine möglichst haftfeste Verbindung zwischen dem Tragkörper 1 und den Einlagekörpern 2 entsteht. Die Verwendung grobporiger Einlagekörper 2 ist besonders vorteilhaft. Der Tragkörper 1 bildet gewissermaßen ein "Bett" für die Einlagekörper 2. Diese bilden in der Tragplatte 1 erhabene und rauhe Oberflächenbereiche 1a, deren höchste Punkte oder Stellen in einer gemeinsamen Ebene E-E liegen, die parallel zur Rückseite 4 verläuft (siehe die Figuren 4 und 13).

Wie - auch aus den Figuren 2 bis 7, die Vertikalschnitte zeigen, - zu erkennen ist, verlaufen die größeren Querschnittsflächen der Einlagekörper 2 parallel zur Rückseite 4 des Bettes 1, und die begehbaren Oberseiten 2a der Einlagekörper 2 ragen um ein gewisses mittleres Maß aus dem Bett 1 hervor, das beispielhaft zwischen 1 und 5 mm liegen kann. Je größer dieses Maß ist, umso besser sind die Drainagewirkung der Zwischenräume, die Rutschsicherheit und auch die Massagewirkung der unregelmäßigen Oberfläche auf die Fußsohlen. Die unregelmäßigen Kanten der Einlagekörper 2 sind - soweit sie aus dem Tragkörper 1 hervorstehenabgerundet und/oder gebrochen, was durch Beschleifen und/oder durch Taumeln der Einlagekörper 2 in einer Trommel vor dem Einbetten durchgeführt werden kann.

Derartige Platten können nicht nur als Wandbeläge, sondern bevorzugt auch als Bodenbeläge in Innenräumen und im Freien verwendet werden, beispielsweise als Bodenbeläge in Sanitärräumen, Dusch- und Badewannen, Wintergärten, auf Teich- und Schwimmbad-Umrandungen, Beckenböden und auf Terrassen und Gartenböden. Hiernach bestimmen sich auch die optimalen Größen, Dicken und Formen der Platten 1. In dem zuletzt genannten Falle können die Platten auch unregelmäßige Umrisse aufweisen.

Als Einlagekörper 2 können auch gebrochene Kunststeine verwendet werden, die entweder von Haus aus eine ähnliche Struktur wie die Natursteine haben, oder die durch Bearbeitung entsprechend strukturiert und mit gebrochenen Kanten versehen werden. Die maximale Breite "B" der Einlagekörper 2 beträgt mindestens das Dreifache ihrer Dicke "D", so daß die Einlagekörper als "flach" bezeichnet werden können.

Die Figuren 2, 3 und 5 zeigen nun Herstellverfahren für Platten, bei denen der Tragkörper 1 aus einem Kunstharz gebildet wird: Dabei wird gemäß Figur 2 in einem Formbehälter 5a zunächst eine erste Lage 6a einer stützenden Schicht 6 aus einem elastomeren Kunststoff wie einem Silikonharz ausgebreitet und zur Verfestigung gebracht. Auf diese erste Lage 6a wird eine zweite Lage 6b des gleichen elastomeren Kunststoffs aufgebracht, die zunächst in flüssigem Zustand gehalten wird.

Die Einlagekörper 2 werden mit ihren später sichtbaren Oberseiten 2a in Richtung der Pfeile "P" nach unten in diese zweite Lage 6b der Schicht 6 eingebettet, wobei die bereits verfestigte erste Lage 6a ein Absinken der Einlagekörper 2 auf den Boden des Formbehälters 5a verhindert (Figur 3). Jetzt wird auch die zweite Lage 6b zur Verfestigung gebracht.

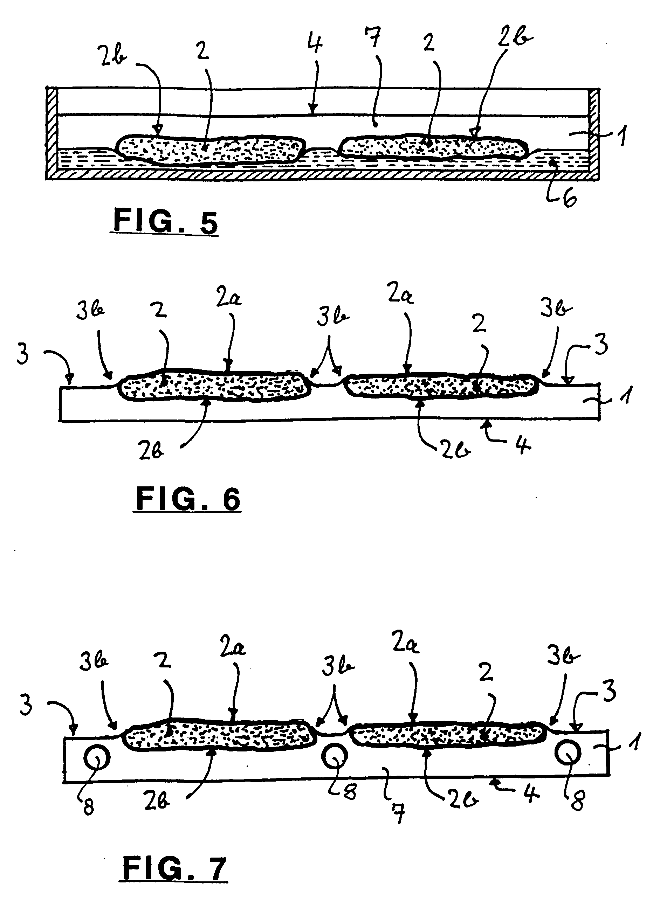

Danach wird die spätere Unterseite 2b der Einlagekörper 2 unter Ausfüllen der Zwischenräume zwischen den Einlagekörpern 2 mit einer zunächst fließfähigen Masse 7 aus der Gruppe aushärtbare Kunststoffe überzogen. Nach dem Erstarren dieser Masse 7 wird der Verbund aus dem Formbehälter 5a herausgenommen, gewendet und alsdann die elastomere Kunststoffschicht 6 entfernt. Alsdann liegt das fertige Endprodukt nach den Figuren 4 und 6 vor.

Die Kunststoffschicht 6 geht keine feste Verbindung mit den Einlagekörpern 2 ein, sondern ist wieder abziehbar. Vorzugsweise besteht das Silikonharz aus einer Zwei-Komponentenn-Mischung, die mit den Einlagekörpern 2 keinerlei Verbindung eingeht und die als Gießform 5 für weitere Abgüsse verwendet werden kann, was weiter unten noch beschrieben wird.

Je nach der Benetzungswirkung der elastomeren Kunststoffschicht 6 lassen sich nun unterschiedliche optische und mechanische Wirkungen erzielen: Bei dem Beispiel nach Figur 4 entstehen an den Umfangsrändern der Einlagekörper 2 meniskusförmige Vertiefungen 3a. Bei dem Beispiel nach Figur 6 entstehen an den Umfangsrändern der Einlagekörper 2 Hohlkehlen 3b, durch die die Reinigungsmöglichkeit verbessert wird.

Figur 7 zeigt eine Platte analog Figur 5, jedoch mit einem zusätzlich in die Masse 7 eingebetteten Heizkörper 8, der als Heizkabel oder als Warmwasserleitung ausgebildet sein kann, um die Platte auf Körpertemperatur zu erwärmen. Dadurch wird ein angenehmes Gehgefühl erzeugt und die Massagewirkung auf die Füße verbessert. Außerdem trocknet eine solche Platte dann schneller. Eine solche Platte, die Längenabmessungen zwischen 80 und 200 cm und Breitenabmessungen von etwa 80 cm haben kann, läßt sich sowohl auf einen Badezimmerboden auflegen als auch - bei Entfernung eines Fliesenbelages - in den Badezimmerboden einbauen, und zwar vor Bade- und Duschwannen sowie vor Waschbecken, um dort durch die aufsteigende Warmluft ein angenehmes Raumklima zu erzeugen. Eine solche Platte läßt sich auch in einer Bade- oder Duschwanne erzeugen oder in diese Einbauen. Eine solche Platte läßt sich ferner in einem Wintergarten verwenden, wenn es darum geht ein angenehmeres Wachstumsklima für empfindliche Pflanzen zu erzeugen. Bei Verlegung im Freien. kann dadurch die Gefahr von Glättebildung durch Reif, Schneefall und/ oder Vereisen beseitigt werden, z.B. auf Terrassen, Treppenstufen, Garageneinfahrten und/oder Gehwegen.

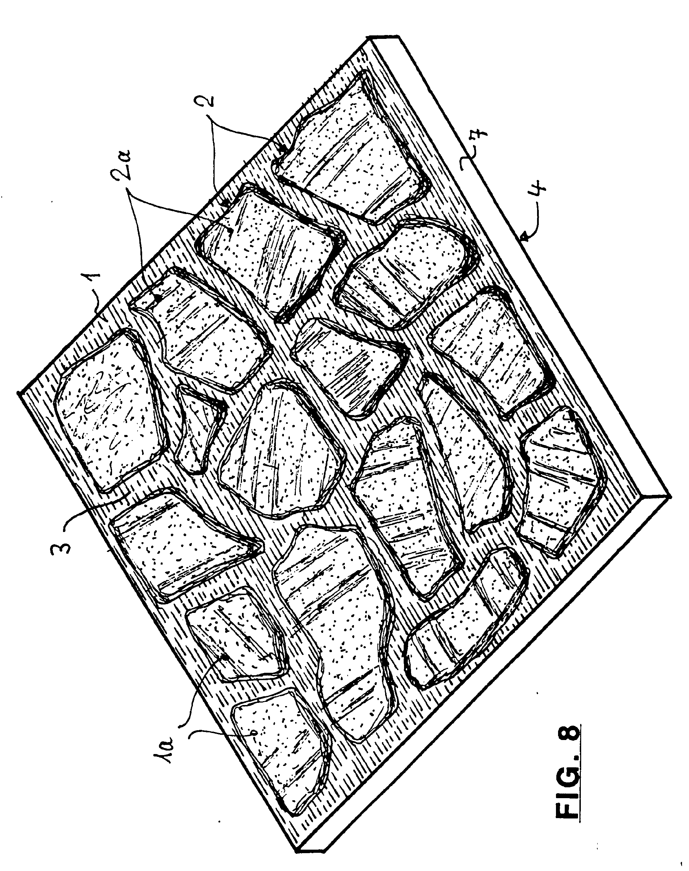

Bei dem Ausführungsbeispiel nach den Figuren 8 bis 13 soll die freie Oberfläche 3 des Tragkörpers 1 zwischen den Einlagekörpern 2 eine Strukturierung erhalten, durch die in den Zwischenräume zwischen den Einlagekörpern 2 der Eindruck von Kunststoff vermieden wird. Die Strukturierung kann dabei einer Holzmaserung oder einer Gesteinsstruktur wie Schiefer oder Granit entsprechen.

Eingebettet in das Kunstharz ist auch hier eine Vielzahl flacher und beidseitig rauher Einlagekörper 2 aus Natursteinen mit unregelmäßigen Umrissen. Die freie Oberfläche 3 des Tragkörpers 1 ist mit dem Muster einer Holzmaserung strukturiert, aber in sich geschlossen, also nicht porös, saug- oder imprägnierfähig und im wesentlichen glänzend und damit Schmutz abweisend.

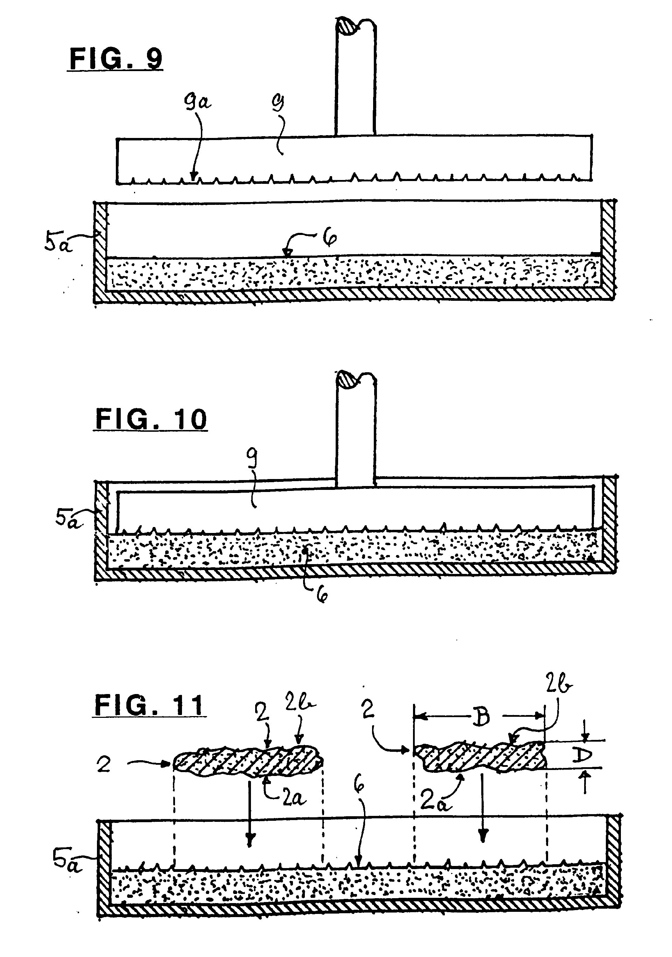

Die Figuren 9 bis 13 zeigen nun ein Herstellverfahren für Platten, bei denen der Tragkörper 1 aus einem strukturierten oder profilierten Kunstharz gebildet wird: Dabei wird in einem Formbehälter 5a zunächst eine Schicht 6 aus einem plastifizierbaren aber zumindest vorübergehend formstabilen Formwerkstoff aus der Gruppe Thermoplaste, Knetmassen, Modelliermassen, Plastillin und Wachse ausgelegt bzw. eingegossen. Solche Werkstoffe sind in dem "RÖMPP CHEMIE Lexikon" von 1995, Georg Thieme Verlag Stuttgart und New York, unter den Stichwörtern "Knetmassen" (Seite 2263) und "Plastilin" (Seite 3476) angegeben. Ggf. ist durch Trennmittel dafür zu sorgen, daß diese Formwerkstoffe keine feste Verbindung mit den Einlagekörpern 2 eingehen, sondern wieder restlos abziehbar sind.

Gemäß Figur 9 befindet sich über dem Formwerkstoff ein Prägestempel 9, dessen Unterseite 9a eine Profilierung nach dem gewünschten Muster aufweist, also beispielsweise das Negativ einer Holzmaserung nach Figur 8 oder eine Profilierung nach Art einer Gesteinsstruktur wie die von Schiefer oder Granit. Solche Strukturen bilden sich als Negativ sehr genau auf der Oberfläche des Formwerkstoffs ab.

Beim Profilieren von thermoplastischen Formwerkstoffen kann der Prägestempel 9 auch mit einer nicht gezeigten Heizeinrichtung versehen sein, oder über der nach oben offenen Gießform 5 befindet sich eine eine gleichfalls nicht gezeigte Strahlungsheizeinrichtung für die Erweichung der Oberfläche des Formwerkstoffs für den Vorgang des Profilierens. Figur 10 zeigt das Ende des Profilierungsvorgangs der gesamten Oberfläche des Formwerkstoffs.

Gemäß Figur 11 werden die Einlagekörper 2 nach dem Entfernen des Prägestempels 9 mit ihren später sichtbaren Oberseiten 2a nach unten in die Schicht 6 eingebettet. Die Einlagekörper 2 sind auf beiden Seiten unregelmäßig ausgebildet und haben Breitenabmessungen "B" und Dicken "D". Der Ausdruck "flach" bezüglich der Einlagekörper 2 besagt, daß "B" mehrfach größer ist als "D" und daß keine vorstehenden Spitzen vorhanden sind wie bei den Produkten nach der eingangs angegebenen GB-PS 1 363 843. An den Stellen, an denen die Einlagekörper 2 eingebettet sind, wird natürlich die Profilierung zerstört, was aber unerheblich ist, da diese Stellen am Endprodukt ohnehin nicht mehr sichtbar sind.

Gemäß Figur 12 werden die Rückseiten 2b der Einlagekörper 2 unter Ausfüllen der Zwischenräume zwischen den Einlagekörpern 2 innerhalb des Formbehälters 5a mit einer zunächst fließfähigen Masse 7 aus der Gruppe aushärtbare Kunststoffe bis zum Füllstand "F" überzogen. Nach dem Erstarren dieser Masse 7 wird der Verbund aus der Gießform 5 herausgenommen, gewendet und alsdann die Schicht 6 aus dem Formwerkstoff entfernt. Alsdann liegt das fertige Endprodukt nach Figur 13 vor.

Wie Figur 13 zeigt, liegen die höchsten Stellen der Einlagekörper 2 zumindest im wesentlichen in einer gemeinsamen Ebene E-E, die parallel zur Rückseite 4 des Tragkörpers 1 verläuft. Zwischen den Einlagekörpern und außerhalb derselben befinden sich Bereiche 3c der profilierten freien Oberfläche 3, was hier sehr vergröbert dargestellt ist. Wichtig ist, daß die Oberfläche dieser Bereiche 3c in sich geschlossen bzw. glänzend, nicht pöros, nicht saugfähig und nicht imprägnierbar ist, im Gegensatz beispielsweise zu den Endprodukten nach der eingangs angegebenen GB-PS 1 363 843, bei denen die Eindringtiefe des Imprägniermaterials in den Sand unterschiedlich und nicht kontrollierbar ist und bei denen in übergangszonen eine krümelige Oberfläche erzeugt wird.

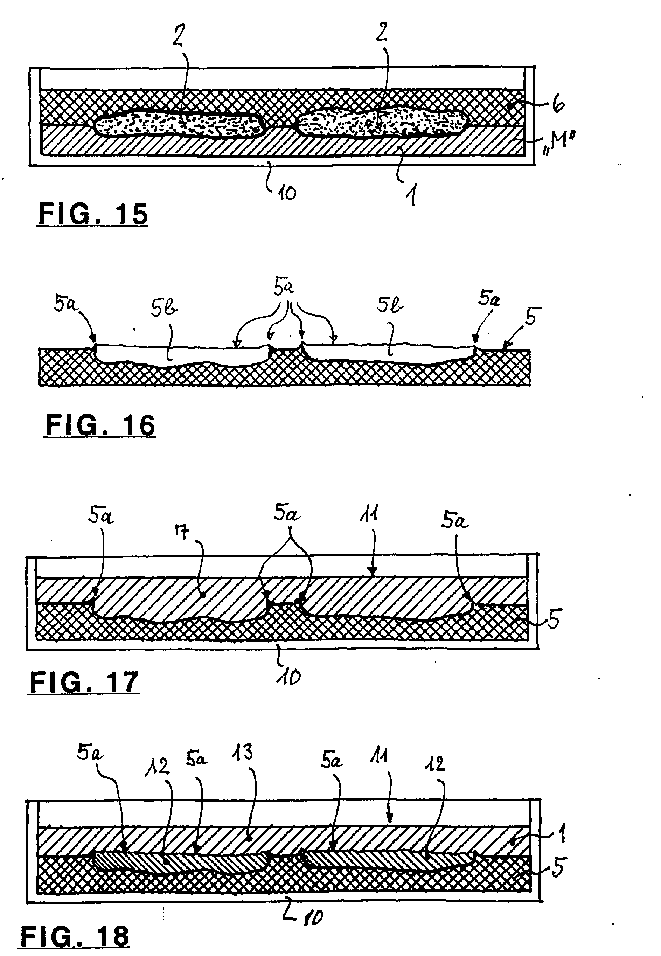

Anhand der Figuren 14 bis 21 wird nachstehend näher erläutert, auf welche Weise sich Unikate mit Einlagekörpern 2 aus Natur- und Kunststeinen vervielfältigen lassen, indem ein plattenförmiger Tragkörper mit vorspringenden Oberflächenbereichen versehen wird, die nach Umriß und Profil eine Oberflächenstruktur von Natur- oder Kunststeinen besitzen und zwischen denen mindestens eine ebene freie Oberfläche des Tragkörpers ausgebildet wird. Der Ausdruck "Platte" schließt Fliesen oder Kacheln üblicher Größen und größere Tafeln ein.

Die Herstellung von Unikaten beschäftigt sich mit Einlagekörpern 2 aus originalen oder gebrochenen Natursteinen, die vorzugsweise mit unterschiedliche Farben (Gold, Blau, Violett, Rot, Grün, Orange, Kupfer, Braun, je nach mineralischen Metallkomponenten), Farbschattierungen und Glanzeffekten (Kristallstrukturen) ausgestattet sein können. Derartige Platten - auch wenn die Einlagekörper 2 aus unregelmäßig gebrochenen Kunststeinen bestehen - sind naturgemäß Unikate, die wegen ihres anspruchsvollen Aussehens besonders wertvoll sind.

Figur 14 zeigt eine Gießform 5 mit Rändern 5a und Vertiefungen 5b wie sie beispielsweise von einem Unikat gemäß Figur 1 durch Abziehen oder Abheben gewonnen werden kann. Diese Gießform 5 ist ein formgetreues negatives Abbild der Platte nach Figur 1.

Aus den Figuren 15 bis 18, die Vertikalschnitte zeigen, geht folgendes hervor:

Die Figur 15 zeigt in vereinfachter Darstellung ein Herstellverfahren für eine Gießform 5 nach Figur 14 für weitere Platten oder Plattenmodelle: Eine Platte nach Figur 1 oder auch ein Abguß aus einer Gießform 5 wird als Modell "M", bestehend aus dem Tragkörper 1 und mehreren Einlagekörpern 2, mit der profilierten Seite nach oben in einen Formkasten 10 eingelegt. Auf diesem Modell "M" wird nun eine Schicht 6 aus einem Formwerkstoff aus der Gruppe elastomere Kunststoffe wie Silikonharze, Thermoplaste, Knetmassen, Modelliermassen, Plastilin und Wachs ausgebreitet, der keine feste Verbindung mit dem Modell "M" eingeht, sondern nach dem Verfestigen zu einer wiederverwendbaren Gießform 5 von dem Plattenmodell "M" abziehbar oder abhebbar ist.

Die Figur 16 zeigt diese Gießform 5 in umgekehrter Lage, und es ist ersichtlich, daß die Ränder 5a der Vertiefungen 5b spiegelsymmetrisch zu den Umrissen der Einlagekörper 2 in Figur 1 verlaufen, wobei mit den Umrissen die Linien gemeint sind, die in etwa in der freien Oberfläche 3 des Tragkörpers 1 liegen.

Die Figuren 17 und 18 zeigen nun Herstellverfahren für Platten oder Plattenmodelle, bei denen der Tragkörper 1 aus einem erstarrten Kunstharz gebildet wird: Dabei wird gemäß Figur 17 auf die Gießform 5 eine Masse 7 aus dem aushärtbaren Kunststoff unter Ausfüllen der Vertiefungen 5b bis zu einem Füllstand 11 aufgebracht, der oberhalb der Ränder 5a liegt. Der Kunststoff kann in der Masse beliebig eingefärbt und auch marmoriert oder mit Schlieren einer anderen Farbe versehen sein. Nach dem Aushärten kann die Gießform 5 mit der Platte (oder dem Plattenmodell "M") aus dem Formkasten 10 entnommen und die Gießform 5 für eine neue Verwendung abgetrennt werden.

Die Figur 18 zeigt die Herstellung von Platten, bei denen die vorspringenden Oberflächenbereiche 1a (Figuren 1 und 8) farblich von dem Tragkörper 1 abgesetzt sind: Zunächst werden die Vertiefungen 5b bis zu ihren Rändern 5a, aber nicht darüber hinaus, mit einer ersten Masse 12 aus einem aushärtbaren Kunststoff ausgegossen, der beispielsweise dunkel, z.B. schwarz, eingefärbt ist. Anschließend wird auf diese Masse 12 eine zweite Masse 13 aus einem anders eingefärbten aushärtbaren Kunststoff bis zum Füllstand 11 aufgegossen. Diese Masse 13, die nach dem Entformen zwischen den vorspringenden Oberflächenbereichen 1a (Figuren 1 und 8) sichtbar ist, kann bevorzugt heller, z.B. hellgrau, eingefärbt sein, oder auch in einer Kontrastfarbe eingestellt werden. Auf diese Weise entsteht der optische Eindruck einer Platte mit Einlagekörpern 2. Der Entformungsvorgang ist der gleich wie der nach Figur 17. Alsdann liegt ein fertiges Endprodukt analog den Figuren 1 oder 8 vor.

Jedes der Endprodukte kann auch wieder als Plattenmodell 9 für eine Vervielfachung verwendet werden.

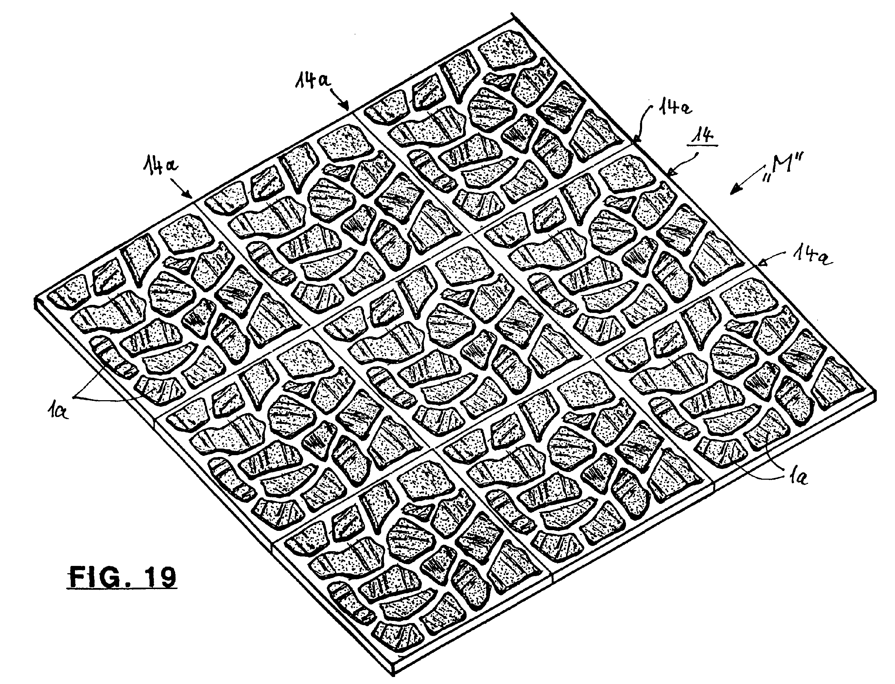

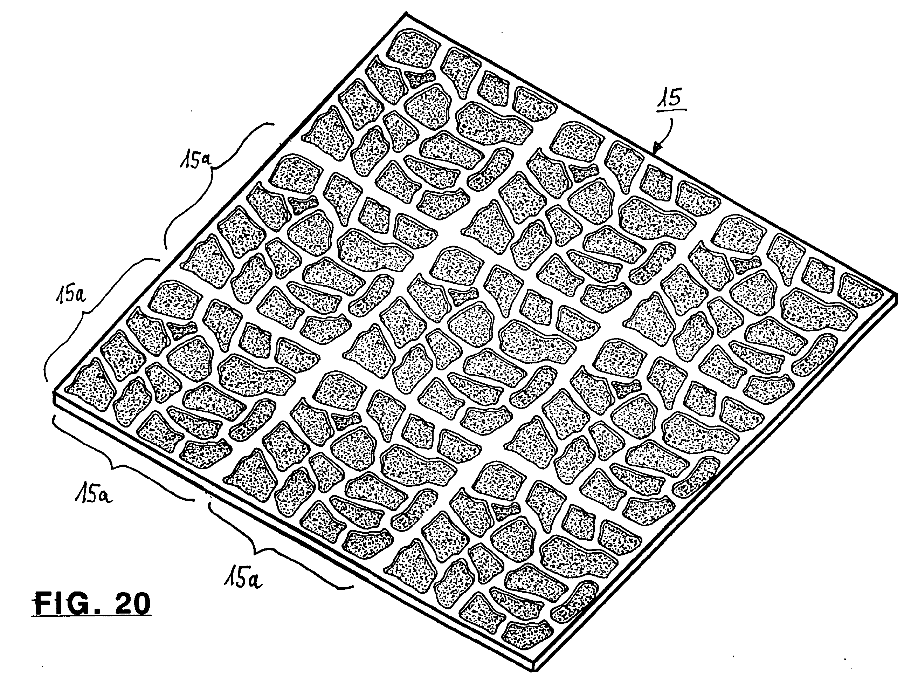

Die Figur 19 zeigt nun eine Flächenanordnung 14 aus neun Platten oder Plattenmodellen nach Figur 1 oder 8, jedoch ist die Anzahl nach unten und nach oben hin keineswegs begrenzt. Mit einer Anordnung nach Figur 19 kann nun in einem entsprechend größeren Formkasten 10 nach Figur 15 mit einem elastomeren Gießharz (z.B. Silikonharz) eine entsprechend große Gießform 15 mit neun Formbereichen 15a nach Figur 20 erzeugt werden, mittels welcher wiederum in analoger Weise wie anhand der Figuren 17 und 18 beschrieben, eine entsprechend große durchgehende bzw. einstückige Platte erzeugt werden kann, die derjenigen nach Figur 19 entspricht, jedoch keine Trennfugen 14a besitzt.

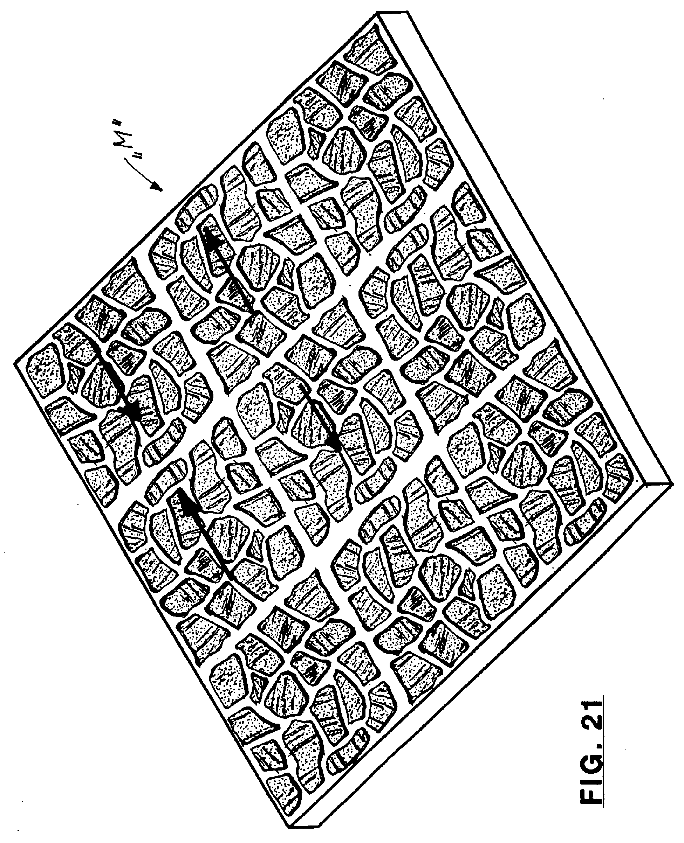

Das Flächenmuster der vorspringenden Oberflächenbereiche 1a nach Figur 19 kann auch dadurch variiert werden, daß man quadratische Platten oder Plattenmodelle "M" alternierend um 90, 180 und/oder 270 Grad um ihre Normalen zu den Hauptebenen verdreht verlegt, so daß Wiederholungseffekte im Aussehen vermieden oder unterdrückt werden. Figur 21 zeigt einen Abguß einer solchen Platten- oder Modellanordnung mit neun Flächenbereichen analog Figur 19, wobei jedoch benachbarte Flächenbereiche um jeweils 180 Grad gegeneinander verdreht sind, was durch dicke Pfeile angedeutet ist. Auch davon läßt sich wiederum eine komplementäre Gießform analog Figur 20 herstellen, die hier jedoch nicht dargestellt ist.

Derartige Flächenanordnungen bzw. Flächenmuster nach den Figuren 19 und 21 können nun fugenlos hergestellt werden, wie dies die Figur 21 zeigt. Es ist jedoch möglich, zwischen den einzelnen Flächenbereichen sogenannte Scheinfugen herzustellen, wenn man die Platten oder Plattenmodelle an ihren Umfangsrändern mit Anfasungen, Abrundungen oder Stufen versieht und nach einer Anordnung gemäß Figur 19 auslegt. Eine davon hergestellte Gießform 15 analog Figur 20 hätte dann zwischen ihren einzelnen Formbereichen 15a stegförmige Rippen oder Vorsprünge, die in einem Endprodukt nach Figur 21 als Rillen wiedergegeben werden, was jedoch nicht dargestellt ist. Solche Rillen können dann mit einer farblich abgehobenen Masse gefüllt werden, die optisch als Fugenzement in Erscheinung tritt.

Die Abmessungen sowohl der einzelnen Platten als auch der Plattenmodelle können nahezu beliebig gewählt und auch miteinander kombiniert werden. Rechteckige, quadratische, sechs- und achteckige sowie unregelmäßige Umrisse sind denkbar. So ist es möglich, die Böden von Bade-und Duschwannen mit durchgehenden Platten auszulegen, wobei notwendige Abrundungen auch durch Zuschneiden hergestellt werden können. Etwaige Spalte an den Umrissen können dann durch ein Fugenmaterial wie Zement oder Silikonharz ausgefüllt werden.

Sofern die Platten durch Abguß mittels einer der Gießformen 5 oder 15 ausschließlich aus einer oder mehreren erstarrten Kunstharzen hergestellt werden, ist es besonders vorteilhaft, die Platten mit einem Bild-überzug in Form von Fotomotiven von Originalsteinen zu versehen, ähnlich, wie dies von sogenannten "Fotofurnieren" bei Holz- und/oder Spanplatten bekannt ist.

### Bezugszeichenliste:

- 1: Tragkörper
- 1a: Oberflächenbereiche
- 2: Einlagekörper
- 2a: Oberseiten
- 2b: Unterseiten
- 3: freie Oberfläche
- 3a: Vertiefungen
- 3b: Hohlkehlen
- 3c: Bereiche
- 4: Rückseite
- 5: Gießform
- 5a: Ränder
- 5b: Vertiefungen
- 6: Formwerkstoff
- 6a: erste Lage
- 6b: zweite Lage
- 7: Masse
- 8: Heizkörper
- 9: Prägestempel
- 9a: Unterseite
- 10: Formkasten
- 11: Füllstand
- 12: erste Masse
- 13: zweite Masse
- 14: Flächenanordnung
- 14a: Trennfugen
- 15: Gießform
- 15: Formbereiche
- "B": Breite
- "D": Dicke
- "M": Modell
- "P": Pfeile

## Patentansprüche

1. Verfahren zum Herstellen von Platten, insbesondere für die Boden-und Wandverlegung, mit einer zumindest im wesentlichen ebenen Rückseite (4), wobei man Einlagekörper (2), die aus einem verschleißfesten und rutschsicheren Werkstoff bestehen und je eine Oberseite (2a) und eine Unterseite (2b) aufweisen, zunächst mit ihren Oberseiten (2a) nach unten in eine stützende Schicht (6) einbettet und danach die Einlagekörper (2) auf ihren Unterseiten (2b) durch eine zunächst fließfähige und dann erstarrende Masse (7) aus einem aushärtbaren Kunststoff verbindet, die den Tragkörper (1) der fertigen Platte bildet, **dadurch gekennzeichnet, daß** man
a) als Einlagekörper (2) flache Körper aus der Gruppe Natursteine und Kunststeine mit rauhen, unregelmäßigen Oberflächen verwendet, deren größte Breite ("B") mindestens das Dreifache ihrer Dicke ("D) beträgt,
b) für die stützende Schicht (6) in einem Formbehälter (5a) einen Formwerkstoff aus einem nicht imprägnierbaren und sich nicht mit den Einlagekörpern (2) verbindenden und wieder entfernbaren, zumindest vorübergehend formstabilen Material aus der Gruppe der elastomeren Kunststoffe, Thermoplaste, Knetmassen, Modelliermassen, Plastilin und Wachse ausbreitet und dadurch eine Gießform (5) bildet,
c) die Einlagekörper (2) bis zu im wesentlichen der Hälfte ihrer Dicke ("D") in die stützende Schicht (6) einbettet,
d) anschließend die zunächst fließfähige und dann erstarrende Masse (7) auf die stützende Schicht (6) und die Einlagekörper (2) unter mindestens teilweisem Ausfüllen der Zwischenräume zwischen den Einlagekörpern (2) aufgießt und erstarren läßt und
e) schließlich die stützende Schicht (6) restlos entfernt.

2. Verfahren nach Anspruch 1, **dadurch gekennzeichnet, daß** man als stützende Schicht (6) ein Silikonharz verwendet und zunächst eine erste Lage (6a) dieses Silikonharzes sich verfestigen läßt, anschließend eine zweite Lage (6b) dieses Silikonharzes auf die erste Lage (6a) aufbringt und die Einlagekörper (2) in diese zweite Lage (6b) einbettet, bevor sich diese zweite Lage (6b) verfestigt.

3. Verfahren nach Anspruch 1 oder 2, **dadurch gekennzeichnet, daß** man die Einlagekörper (2) mit ihren größten Querschnittsflächen so tief in einer zumindest im wesentlichen zur Rückseite (4) parallelen Lage in die erstarrende Masse (7) einbettet, daß die höchsten Stellen der Oberseiten (2a) zumindest im wesentlichen in einer gemeinsamen Ebene (E-E) liegen, die zumindest im wesentlichen parallel zur Rückseite (4) des Tragkörpers (1) verläuft.

4. Verfahren nach Anspruch 3, **dadurch gekennzeichnet, daß** man die Einlagekörper (2) mit einem Teil ihrer Dicke aus der Masse (7) vorstehen läßt und die herausragenden Kanten der Einlagekörper (2) vor dem Einbetten bricht oder abrundet.

5. Verfahren nach Anspruch 1, wobei man als stützende Schicht (6) einen Formwerkstoff aus einem plastifizierbaren, aber zumindest vorübergehend formstabilen Formwerkstoff aus der Gruppe Thermoplaste, Knetmassen, Modelliermassen, Plastilin und Wachse verwendet, **dadurch gekennzeichnet, daß** man
a) diesen Formwerkstoff mit einer Oberflächenstruktur aus der Gruppe Holzmaserung und Gesteinsstruktur profiliert,
c) alsdann die Einlagekörper (2) mit ihren später sichtbaren Oberseiten (2a) nach unten in diese Schicht (6) aus Formwerkstoff mit mindestens einem Teil ihrer Dicke einbettet,
d) danach die Unterseiten (2b) der Einlagekörper (2) unter mindestens teilweisem Ausfüllen der Zwischenräume zwischen den Einlagekörpern (2) mit der fließfähigen Masse (7) aus aushärtbarem Kunststoff überzieht und diese Masse (7) erstarren läßt und
e) abschließend den Formwerkstoff restlos entfernt.

6. Verfahren nach Anspruch 5, **dadurch gekennzeichnet, daß** man die Profilierung der Schicht (6) des Formwerkstoffs mit mindestens einem Prägestempel (9) vornimmt.

7. Verfahren nach mindestens einem der Ansprüche 1 bis 6, **dadurch gekennzeichnet, daß** mindestens eine Platte als Plattenmodell (M) für die Herstellung mindestens einer Gießform (5, 15) zur Herstellung weiterer Platten verwendet wird.

8. Verfahren nach Anspruch 7, **dadurch gekennzeichnet, daß** die Gießform (5, 15) mit einer Vielzahl von Vertiefungen (5b) gebildet wird, die von Rändern (5a) umgeben sind und eine Oberflächenstruktur aufweisen, die komplementär zur Oberflächenstruktur von Natur-oder Kunststeinen ist.

9. Verfahren nach Anspruch 7, **dadurch gekennzeichnet, daß** in die Gießform (5, 15) eine aushärtbare Masse (7) bis zu einem Füllstand (11) eingegossen wird, der oberhalb der Ränder (5a) liegt.

10. Verfahren nach Anspruch 7, **dadurch gekennzeichnet, daß** in die Vertiefungen (5b) der Gießform (5, 15) eine erste aushärtbare Masse (12) mit einer ersten Farbe bis zu den Rändern (5a) der Vertiefungen (5b) eingegossen wird und daß darüber eine zweite aushärtbare Masse (13) mit einer zweiten Farbe bis zu einem Füllstand (11) eingegossen wird, der oberhalb der Ränder (5a) liegt.

11. Verfahren nach Anspruch 7, **dadurch gekennzeichnet, daß** mehrere Platten oder Plattenmodelle (M) in einer Flächenanordnung (14) ausgelegt und für die Herstellung einer Gießform (15) mit einer entsprechenden Anzahl von Formbereichen (15a) verwendet werden.

12. Verfahren nach Anspruch 11, **dadurch gekennzeichnet, daß** die Platten oder Plattenmodelle (M) gegenüber benachbarten Platten oder Plattenmodellen (M) beim Auslegen um 90, 180 oder 270 Grad um ihre Flächennormalen gedreht werden.

13. Verfahren nach mindestens einem der Ansprüche 7 bis 12, **dadurch gekennzeichnet, daß** die durch Abguß mittels einer Gießform (5, 15) hergestellten Platten mit einem Bild-überzug in Form von Fotomotiven von Originalsteinen versehen werden.

14. Platte, insbesondere für die Boden- und Wandverlegung, mit einer zumindest im wesentlichen ebenen Rückseite (4), bestehend aus Einlagekörpern (2) aus einem verschleißfesten und rutschsicheren Werkstoff, die unter Freilassung ihrer Oberseiten (2a) mit einem Teil ihrer Dicke in eine erstarrte Masse (7) aus einem ausgehärteten Kunststoff eingebettet sind, die einen Tragkörper der fertigen Platte bildet. **dadurch gekennzeichnet, daß**
a) die Einlagekörper (2) flache Körper aus der Gruppe Natursteine und Kunststeine mit rauhen, unregelmäßigen Oberflächen sind, deren größte Breite ("B") mindestens das Dreifache ihrer Dicke ("D") beträgt und deren größte Querschnittsflächen in einer zumindest im wesentlichen zur Rückseite (4) parallelen Lage in der Masse (7) eingebettet sind, und daß
b) die Masse (7) zwischen den Einlagekörpern (2) und am Umfangsrand der Platte mit einer Profilstruktur mit einer geschlossenen und zumindest im wesentlichen ebenen Oberfläche ausgebildet ist.

15. Platte nach Anspruch 14, **dadurch gekennzeichnet, daß** der überstand der Einlagekörper (2) über der Masse (7) zwischen 1 und 5 mm beträgt und daß die herausragenden Kanten der Einlagekörper (2) gebrochen oder abgerundet ausgebildet sind.

16. Platte nach Anspruch 14, **dadurch gekennzeichnet, daß** die Einlagekörper (2) so tief in den ausgehärteten Kunststoff eingebettet sind, daß die höchsten Stellen der sichtbaren Oberseiten (2a) der Einlagekörper (2) zumindest im wesentlichen in einer gemeinsamen Ebene (E-E) liegen, die zumindest im wesentlichen parallel zur Rückseite (4) des Tragkörpers (1) verläuft.

17. Platte nach Anspruch 14, **dadurch gekennzeichnet, daß** die Platte üblichen Fliesenabmessungen aus der Gruppe 15 x 15, 10 x 20, 20 x 20, 30 x 30, 30 x 50 (alle Maße in "cm") entspricht.

18. Platte nach Anspruch 14, **dadurch gekennzeichnet, daß** in die Platte ein Heizköper (8) aus der Gruppe Heizkabel und Warmwasserleitung eingebettet ist.

19. Platte, insbesondere für die Boden- und Wandverlegung, mit rauhen, unregelmäßigen und vorspringenden Oberflächenbereichen (1a), die durch einen Tragkörper (1) miteinander verbunden sind, **dadurch gekennzeichnet, daß** ein insgesamt gegossener plattenförmiger Tragkörper (1) mit den vorspringenden Oberflächenbereichen (1a) versehen ist, die nach Umriß und Profil eine Oberflächenstruktur von Natur- oder Kunststeinen besitzen und zwischen denen mindestens eine ebene freie und geschlossene Oberfläche (3) des Tragkörpers (1) vorhanden ist.

20. Platte nach Anspruch 19, **dadurch gekennzeichnet, daß** die Platte aus zwei vergossen Massen (12, 13) unterschiedlicher Farbe besteht, von denen die erste Masse (12) die vorspringenden Oberflächenbereiche (1a) und die zweite Masse (13) den Rückguß der ersten Masse (12) und die freie Oberfläche (3) des Tragkörpers (1) bildet.

21. Platte nach Anspruch 19, **dadurch gekennzeichnet, daß** die vorspringenden Oberflächenbereiche (1a) ein begrenztes Flächenmuster bilden und daß sich dieses Flächenmuster auf der Platte mehrfach wiederholt.

22. Platte nach Anspruch 19, **dadurch gekennzeichnet, daß** die Flächenmuster eines Oberflächenbereichs gegenüber Flächenmustern benachbarter Oberflächenbereiche um 90, 180 oder 270 Grad um ihre Flächennormalen gedreht sind.

23. Platte nach mindestens einem der Ansprüche 19 bis 22, **dadurch gekennzeichnet, daß** die durch Abguß mittels einer Gießform (5, 15) hergestellten Platten mit einem Bild-überzug in Form von Fotomotiven von Originalsteinen versehen sind.

24. Verwendung der Platte nach Anspruch 14 oder 19 als durchgehende Vorlageplatte für eine Wanne aus der Gruppe Duschwanne und Badewanne.

25. Verwendung der Platte nach Anspruch 14 oder 19 zur Bildung einer durchgehenden Bodenfläche für eine Wanne aus der Gruppe Duschwanne und Badewanne.

26. Gießform für die Herstellung einer Platte nach mindestens einem der Ansprüche 14 bis 25, **dadurch gekennzeichnet, daß** die Gießform (5, 15) eine stützende Schicht (6) eines Formwerkstoffs aus der Gruppe der elastomeren Kunststoffe, Thermoplaste, Knetmassen, Modelliermassen und Wachse und eine Vielzahl von Vertiefungen (5b) besitzt, die von Rändern (5a) umgeben sind und eine Oberflächenstruktur aufweisen, die komplementär zur Oberflächenstruktur von gebrochenen Natur- oder Kunststeinen ist.

27. Gießform nach Anspruch 26, **dadurch gekennzeichnet, daß** sie mehrere Formbereiche (15a) mit je einem identischen Flächenmuster der Vertiefungen (5b) besitzt.

28. Gießform nach Anspruch 26, **dadurch gekennzeichnet, daß** die Flächenmuster der Vertiefungen (5b) benachbarter Formbereiche (15a) zueinander um 90, 180 oder 270 Grad gedreht sind. (Ende)
